# EUROPEAN PATENT SPECIFICATION

(11) **EP 1 701 500 B1**
(45) Date of publication and mention of the grant of the patent: **09.02.2011**
(21) Application number: 06251221.5
(22) Date of filing: 08.03.2006
(51) Int. Cl.: H04L 29/06

(54) **Communications system with distributed risk management**
Kommunikationssystem mit verteiltem Risikomanagement
Système de communication avec gestion de risque distribuée

(30) Priority: 08.03.2005 GB 0504772
(43) Date of publication of application: 13.09.2006
(73) Proprietor: WeDo Technologies (UK) Limited, Forbury Square Reading RG1 3EU (GB)
(72) Inventor: Collins, Simon Christopher, Reading RG2 0TD (GB)
(74) Representative: Dunlop, Hugh Christopher

(56) References cited:
- DE-A1- 10 024 234
- DE-A1- 19 955 018
- US-A1- 2003 110 394
- US-A1- 2004 025 044
- US-B1- 6 654 589

## Description

### Field of the Invention

This invention relates to communications systems such as mobile radio telephone, fixed digital communications, internet and other systems, and it relates to the provision of features or services aimed at improved system management, for example for detection of fraud, protection of revenue or other associated risk management.

### Background to the Invention

Traditional telephone systems, often referred to as Plain Old Telephone Service (POTS), provided very basic circuit-switched dial-up capability in which the terminal device could merely identify the telephone number to be dialled, accept the circuit-switched connection and signal a hang-up condition to the network. Early (analogue) mobile telephone systems provided a modicum of additional signalling between the handset and the network. Embellishments on such systems have been described (such as that described in US Patent No. 6650887 of Telemac Corporation), in which DTMF signalling takes place between the terminal and a central hub for communication of billing information. Charge rates and credits are communicated to the telephone. The telephone has an internal accounting capability and can end a call when credit runs out. US Patent No. 6625439 of Telemac Corporation brings such a system into the digital age with short message service (SMS) refreshing of credit on the 'phone, and US Patent No. 6725031 of the same assignee adds a rating capability to the 'phone, with the possibility of recording rating information and forwarding it to the network for unspecified processing.

Telecommunication is going though a major change in the way people and technology allow information, whether voice, data or other digitised information, to be transferred. This has been possible with the pervasive use of personal terminal devices and use of PCs that provide the conversion of the voice and data to common internet-based formats. There is rapid growth in peer-to-peer (P2P) services either mobile or fixed based services. There is also widespread use of services like instant messaging (e.g. MSN, Yahoo messenger, and presence indicating system in the mobile environment) and increasing use of VoIP services that are providing significant increase in P2P communication.

Telecommunication service providers are also lowering cost and improving flexibility through the use of soft switching and packet-based technologies in both the mobile and fixed communications areas. These changes and advancements in technology are allowing terminal-to-terminal (T2T) communication without decoding or switching within the central system, by routing of packets of data to a final destination. In addition terminal devices nowadays have much greater processing capacity and battery life. This allows for significantly more features in the terminal, such as the management of information and its conversion to other mediums, such as IP traffic. In addition, the terminal could have the ability to provide control and monitoring of the subscriber's activity.

Present risk control systems such as fraud management and revenue assurance system controls used by telecom companies are based on centralised systems, which use information that originates from the underlying network components and nodes of central systems, such as telecommunication switches, packet controllers and other value added platforms (including voicemail, SMS,WAP and systems built on GPRS such as Push To Talk (PTT), that generate billing information or use signalling information (SS7) to build call records. This information is often collected by some form of mediation platform, then processed and sent to a central risk system such as a fraud detection platform or revenue assurance system for pattern and trend analysis and alerting of issues.

US Patent Application No 2003/0101357 of ECtel Ltd., for example, describes an arrangement for detecting a fraud events based on a distributed network by analysis in a central apparatus that monitors communications in the network (whether from fixed or wireless terminals) and identifies inconsistencies. Similarly, International Patent Application No. WO02/075339 describes a fraud monitoring system that centrally applies fraud pattern detection algorithms to communications in the system.

DE 199 55 018 Al gives a general description of a "legal intercept" type of communications system, with the legal interception taking place in the network. US 6,654,589 is also concerned with legal interception. In this case, the legal interception takes place in a packet radio system such as GPRS.

With service providers (SPs) selling broadband connection services and increasingly promoting additional premium services, there is a need for additional controls for fraud management, revenue assurance, security protection, content control and other risk management capabilities.

### Glossary of Acronyms

- 3G: Third Generation mobile technology
- 3GPP: Third Generation Partnership project
- CIS: Central Information Server
- CS: Circuit Switched
- DoD: Department of Defence (US)
- EDR: Event Data Records - a generic version of information used for billing purposes
- ETSI: European Telecommunications Standard Institute
- FMS: Fraud Management System
- RAS: Revenue Assurance System
- GPRS: General Packet Radio System
- GPS: Global Positioning System
- GSM: Global System Mobile (translation)
- IMEI: International Mobile Equipment Identity
- IMSI: International Mobile Subscription Identity
- IP: Internet Protocol
- ISP: Internet Service Provider
- IPTV: Internet Protocol Television
- JAVA™: A cross platform application code developed by SUN Micro Systems.
- LAN: Local Area Network (backbone carrier for IP packets)
- LIC: Legal Interception Centre
- LIMP: Legal Interception Monitoring Point
- LITP: Legal Interception Termination Point
- MO: Mobile Originated
- MT: Mobile Terminating
- MMS: Multi Media Service
- OTA: Over The Air activation
- P2P: Peer to Peer communication; a process where the terminal device decodes and manipulates the information for presentation and use in another terminal device without interaction or management by a central system.
- PC: Personal Computer
- PDA: Personal Digital Assistant
- PRS: Premium Rate Services
- PTL: Praesidium Technologies Limited
- RA: Revenue Assurance
- SIM: Subscriber Identification Module
- SMS: Short Message Service
- SP: Services Provider
- SS7: Signalling System Number 7, also known as C7
- T2T: Terminal to Terminal
- TIC: Terminal Information Collector
- USIM: Universal Subscriber Identification Module (SIM for 3G networks)
- USSD: Unstructured Supplementary Services Data
- VoIP: Voice over IP
- WAP: Wireless Application Protocol

### Summary of the Invention

In accordance with a first embodiment of the invention, a communications system is provided comprising a subscriber terminal for communication through a distributed communications network. The system also has a central information server (CIS). The subscriber terminal has means for establishing a communications through the communications network and a terminal information collector (TIC) module for collecting information relating to such communications. It also has: server reporting means for reporting to the CIS information collected by the TIC module; means for receiving at least one configuration parameter indicative of a level of monitoring; and means for adjusting, in response thereto, an information collection and/or a reporting period. The CIS comprises a risk analysis module for risk analysis of the information collected.

The adjusting of the information collection and/or reporting may be based on the risk level determined in the CIS.

An example of adjusting of information collection and reporting is adjusting the information reporting period or risk relevant information provided to the CIS, for example, the final terminal identity.

Means may be provided for sending to the terminal a parameter indicative of the level of monitoring. e.g. a parameter configuration module may be provided in the server, or in association with the server, or elsewhere in the system, that stores, configures and sends via a communication module a parameter or set of parameters to be used by the terminal application. The terminal preferably also has a terminal authorization module.

The central information server preferably comprises an analysis module for analysing the information collected, e.g. in relation to fraud and/or revenue loss risks.

Preferably the server comprises a decryption module for decrypting information reported from the terminal and comprises a risk module that assesses the need for selective monitoring and determines a level of monitoring to be conducted at the terminal.

Means may be provided in the system for presenting in graphical form a representation of a customer risk level, setting and parameters tracked over time.

The invention also relates to a communications terminal adapted for communication through a distributed communications network and adapted for communication with a central information server, the terminal comprising: means for establishing a communications through the communications network; a terminal information collection module for collecting information relating to communications established through the communications network; server reporting means for reporting to the central information server information collected by the terminal information collection module; and means for receiving from the server, at least one configuration parameter to control the collection and/or reporting of information.

In accordance with a further aspect of the invention, a risk analysis server is provided for a communications system having a subscriber terminal for communication through a distributed communications network. The server comprises: means for causing at least one configuration parameter indicative of a level of monitoring to be sent to the subscriber terminal; means for receiving from the subscriber terminal information relating to communications with the subscriber terminal collected in accordance with the level of monitoring; and a risk analysis module for risk analysis of information relating to communications with the subscriber terminal. In this context, the term "risk management" is used to encompass fraud management, revenue assurance, security protection, credit control, content monitoring, legal interception and the like, and the term "risk analysis" is used to refer to the identification of occurrence of an event or events that is/are indicative of fraud loss, revenue leakage, security breach, credit risk or content abuse, and the term encompasses calculation of a likelihood of occurrence of any such event or condition.

The information collected (or selectively collected) may comprise routing information for a call (such as time, date, origination and destination addresses, sequence number and other identifiers) or for a transaction or communication activity, or portions or copies of at least the data conveyed through the network.

In this way, the activities of the customers using the terminals provided with the system notify a centralised entity, as required, with information relating to risk management, and the terminal can be configured to remotely trap and report back information as specified by the central system.

Preferably automated actions are triggered in the TIC according to predetermined criteria.

It is preferred that the terminal application can remotely upload to the terminal; that the terminal application can be remotely updated under the control of the central system and that control parameters can be downloaded by or uploaded to the terminal application to affect decisions on the type and frequency of the collection of risk related information by the terminal, and of its reporting back.

The terminal may be any distributed network node such as a PC or mobile telephony device and the functionality specified by this system may be implemented in either software or hardware.

The application can reside in either the terminal device (such as a PC or mobile terminal) or in a separate identification and secure storage device (SIM/USIM or similar) for mobile terminal devices.

The system preferably makes use of standard protocols for the transfer of information between the terminal and central system, such as GSM, or Internet based protocols from the terminal.

For privacy reasons, the TIC will only use information about the user that the operator is entitled to collect for its operational purposes in line with any contractual agreement and terms and conditions of service as defined by the telecom operator or other legal requirement set out in the law of the country in which the service is operated.

The invention permits data to be collected that could not otherwise be collected by a central system (e.g. activity that is not normally reported and for which data would not otherwise be available, such in the case of data coded from media such as voice, video or other media formats passed between P2P services). The data collected for analysis is collectable on a customer-by-customer basis, so can preferably be collected from only the highest risk customers minimising risk control related data passed in the network.

The communications terminal may comprise server reporting means for reporting to the central information server information collected by the terminal information collection module, encapsulated in suitable form with an address for the server, wherein the information reported includes portions at least of the data conveyed through the network. This aspect of the invention is useful for "legal intercept" - i.e. conveying content of a call or communication (e.g. a SMS message or a segment of digitized speech) to a server using a unique server address appended to the information independent of the end-to-end call or communication.

Reporting to the server may be cotemporaneous with the call or communication using an independent channel (e.g. SMS, USSD or other data bearer) or may be offline when the call or communication is completed.

The system can be implemented in a modular approach to data collection and processing, to facilitate changes in the collected and reported information.

A preferred embodiment of the invention will now be described, by way of example only, with reference to the drawings.

### Brief Description of the Drawings

Fig. 1 is a sketch diagram giving an overview of a communications system in accordance with the preferred embodiment of the invention.
Fig. 2 is a block diagram showing elements of the CIS of Fig. 1.
Fig. 3 is a block diagram showing elements of the TIC of Fig. 1.
Fig. 4 is a block diagram illustrating a further embodiment of a TIC.

### Detailed Description of the Preferred Embodiment

In the description that follows, the term "Telecommunication network" will be used to refer to any bearer network that carries information between two points using any bearer method and the term "terminal device" will be used to refer to any computing device that can communicate and pass information in a digital format.

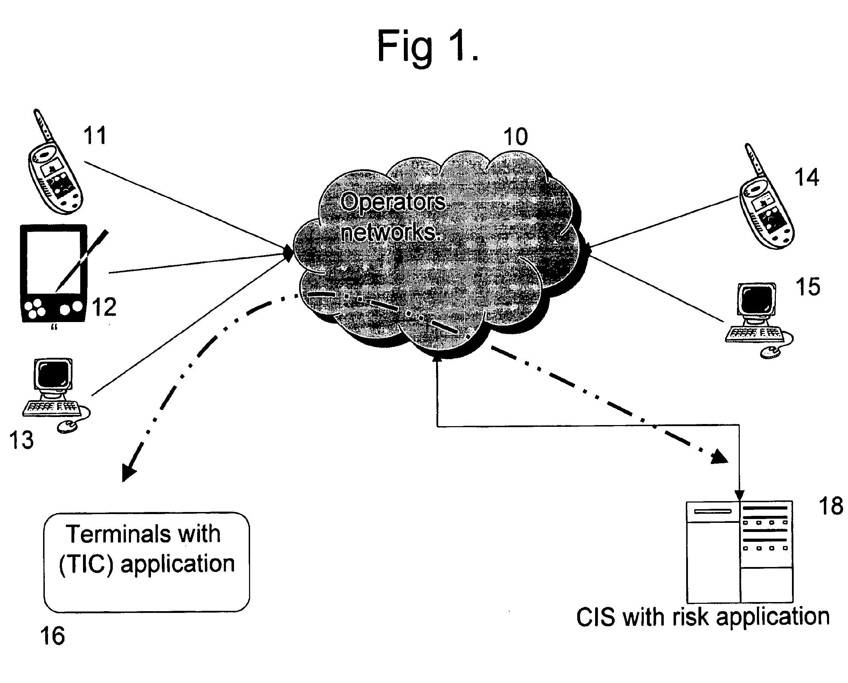

Referring to Fig. 1, a communications system is shown comprising a network 10, such as a mobile telephone network, which may extend to a fixed telephone network or the Internet transport medium, with a first terminal such as a mobile phone 11 or wireless computing device 12 or fixed PC 13 communicating through the network with a second terminal such as a mobile phone 14 or a fixed PC 15.

Within or connected to the network 10 is a central information server (CIS) 18, owned and operated by the same entity (telecommunications operator) as the entity operating the network or other approved legal entity. The CIS and the network provide a communication path between the operator and the customer, by any method such as a mobile GSM circuit switched connection, OTA communication, SMS, a data channel provided by GPRS, 3G or a fixed IP service over the internet. Typical networks would be broadband internet services provided by ISPs, wireless LAN networks (either public or private) and mobile terminals, such as the GSM standard.

The first terminal device 11, 12 or 13 is provided with a software program, referred to here as a terminal information collector (TIC) 16, which is described in greater detail below. The TIC is supplied by the network operator or service provider and performs information gathering tasks.

Information gathered in the TIC 16 is given to the central system 18, where it is processed to determine if there is a risk of fraud loss, revenue leakage, security breach or content abuse occurring in the terminal device or due to the actions of the terminal device. The information gathered can also be used to assist in providing the facility for legal interception in line with specific requirements. The CIS 18 provides three parts of this process solution: the dispatch of the terminal control program and its configuration; the triggering of the collection and dispatch of information by the terminal device; and the algorithmic processing of the information for the determination of fraud, revenue loss and for other security purposes.

The TIC software to be used in the terminal that is operated by the customer can be pre-loaded into the terminal in conjunction with other security modules (SIM, USIM) or can be deployed in the field in a number of ways. The following example is applicable where the terminal is able to support a Java™ applet (or similar software application) that is downloadable, but the principles described are not related to any particular software code.

The software application applet is either stored in the CIS 18 for deployment or sent to the CIS by other platforms, such as OTA servers, in a manner known in the art of WAP and handset configuration. Alternatively it can be downloaded in the initial programming of the terminal device. In the case of a downloaded application, this is based on identification that the device is on the network (by other platforms operated by the operator) and the transfer of the application via industry standard protocols and methods.

Once loaded into the terminal, the TIC software records information relating to each activity or session that occurs through the network 10, whether voice or data or other media, and sends the information back to the central system CIS.

A useful preferred feature is the ability to selectively set (under the control of the operator) conditions on the terminal application to enable complete, partial or no collection of information. This enables the operator to limit and control the amount of risk information collected against that needed for effective management, such as for revenue assurance and fraud management, or compliance with legal interception requirements in accordance with local regulations and laws. It also allows control of the amount of information collected so as to tailor the storage capacity and data processing required by such data, and to tailor the amount of traffic created on the network by such data.

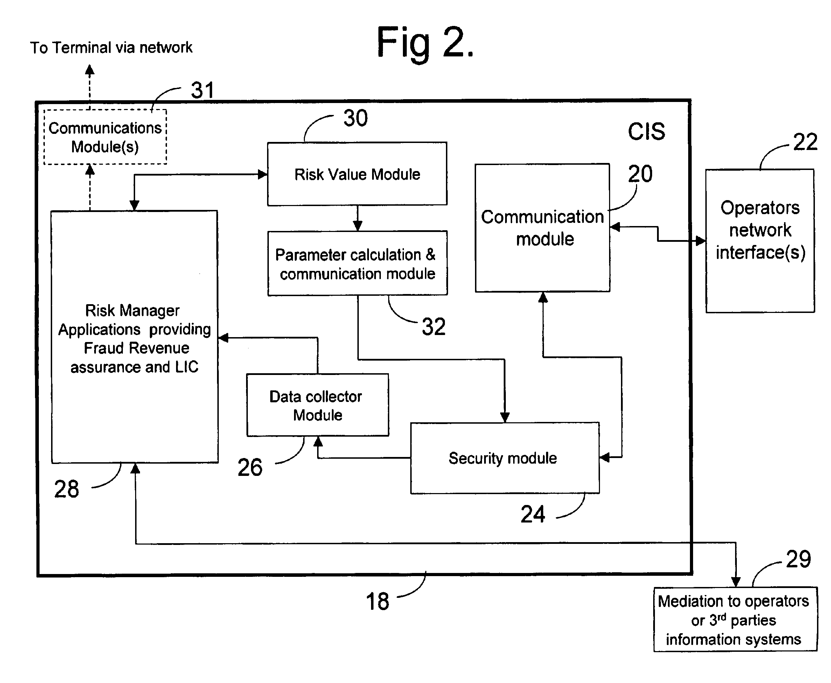

A preferred embodiment of the CIS 18 is illustrated in greater detail in Fig. 2. In its preferred embodiment, the CIS comprises a communications module 20 for communication through an operator's network interface 22 with the network 10. Connected to the communication module 20 is a security module 24 that provides encryption, decryption, authentication and non-repudiation functions so as to enable secure communication to the network. This in turn is connected to a data collector module 26, which is connected to a risk manager application or suite of applications 28 that provide fraud detection, revenue assurance and legal interception. Note that these applications could be RAS or FMS servers operated remotely by third parties, through a further secure connection. Also connected to the risk manager applications 28 is a risk value module 30, which can provide feedback to the risk manager applications 28 and which is connected to a parameter calculation and communication module 32, which in turn is connected to the security module 24 for secure communication to the network through the communications module 20.

The CIS is based on a database system that has terminal-based event records supplied to it from the terminal application's TIC over the bearer network 10. In operation, records received by the communication module 20 and decrypted and authenticated by the security module 24 are fed to the risk manager applications 28. Here they are used for the risk review process. At the same time, or periodically, a set of algorithms is applied to the data by the risk value module 30 to determine an associated risk level. The risk value module 30 assesses the need for selective monitoring and determines the level of monitoring that should be conducted. Based on the risk level, the parameter calculation and communication module 32 prepares a command and sends this to the TIC to configure the terminal to supply information to the CIS for further review. These settings may be learned over time by analysis of usage patterns or could be manually set.

The CIS 18 could be an off-the-shelf fraud detection or telecom integrated or enterprise risk management platform, but with an additional control module that would send requests to the TIC and receive information from the TIC. The records can then be used to validate the subscriber activity more accurately than would be possible through merely looking at the event records from the network using a conventional fraud management system, because the actual terminal activity is being monitored, not the activity seen by a central system (that may have errors in its configuration), or in formation that can not been seen by a central system such as in the case of T2T or P2P systems.

The risk value module 30 conducts the following processes to minimize the flow of information from the terminal device.

The information obtained from the terminal's TIC 16 is reviewed in the risk value module 30 to determine a risk score for the terminal based on the information gained. The risk score may be used for either fraud or revenue assurance purposes. This risk score has two purposes, to indicate the risk level of the customer, and to determine how often the customer data is requested from the TIC (and/or the type of detail to which that data is to be provided). In this way, based on the current risk level set, the system can determine parameters for monitoring from the TIC, and if the risk score is good or improving, then the system asks for either different information or less frequent information, e.g. once every two days for a low risk customer compared to every event for a high risk customer.

The risk value used is stored for the customer and the risk profile can then be displayed over a monitoring period, e.g. a 90-day period. This could be configurable by the operator or service provider and subject to local data protection rules that may apply. From a management perspective, the graphical history would be easy to review the short and long-term trends of risk.

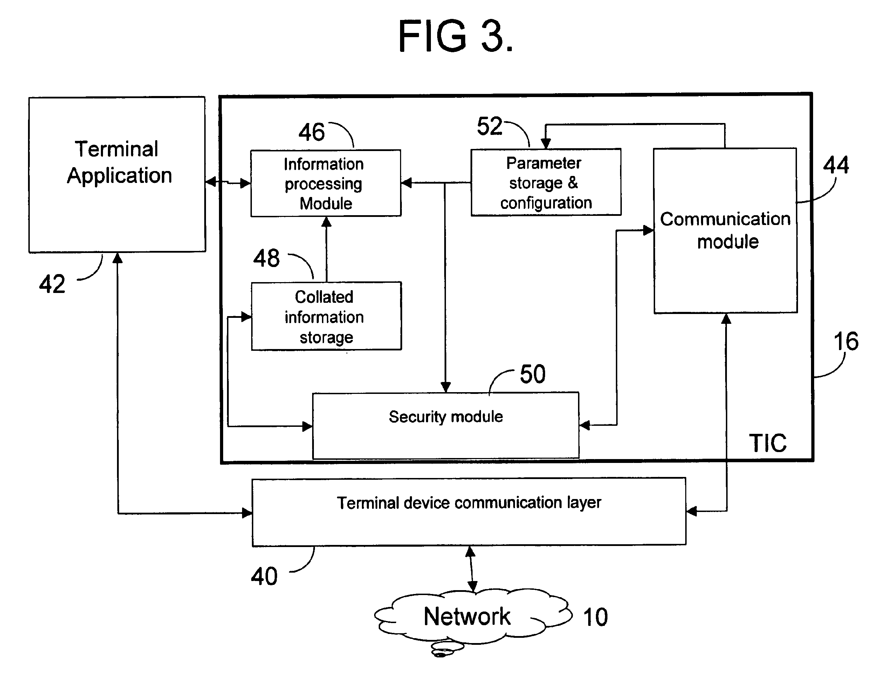

Referring to Fig.3, a preferred embodiment of a TIC 16 is shown connected to a terminal device communication layer 40 (e.g. a radio module supporting SMS, GPRS or CS, or an IP packet module supporting IP packet layers 1 to 3). Coupled to the terminal device communication layer are a terminal application 42 and a TIC communication module 44. The terminal application 42 is the standard or existing terminal application that performs the primary functions of the terminal (e.g. voice communications, SMS, email, Internet browsing, VoIP, push-to-talk, content purchasing, gaming etc.) while the communication module 44 is part of the TIC 16. In the centre of the figure is an information processing module 46 coupled to the terminal application 42. The information processing module is coupled to a collated information store 48. Both the store 48 and the information processing module 46 are coupled to a security module 50 that provides encryption, authentication and non-repudiation functions. A parameter storage and configuration module 52 is provided which has a receive connection from the communication module 44 and has a control connection to the information processing module 46.

In operation, the user, for example makes telephone calls, sends and receives text messages and accesses the Internet in the normal manner through the terminal device communication layer 40. With each action initiated in the terminal application 42, the information processing module 46 interworks with the terminal application records information and stores this in store 48. For example, with each telephone call originated, received or missed, module 46 records the telephone origination and destination number and time. With each ongoing call (originated or received) module 46 records the duration. Similarly it records addresses and sizes of received and sent SMS messages, datagrams or data files and it records URLs of websites visited; or in the case of P2P communication, the encryption shared key used and the destination IP address used along with the intermediate address used for the dynamic routing. This type of information is not available in any central system due to the nature of P2P communication, which only the terminal device has.

Where appropriate, module 46 selects content from the call, message, datagram, file, etc. (e.g. selectively doing so dependent on origination number or source or destination address) and causes this to be stored in store 48.

As an alternative, the terminal application 42 may be requested, based on a received parameter, to store specific information, such as the start of the call or data session, and to hold the information until completion of the call or data session or wait for a period of time before sending the information to the information processing module.

A time is reached when the TIC 16 is due to report to the CIS. That time is determined by parameters stored in the parameter storage and configuration module 52. When a report is due, parameter storage and configuration module 52 initiates the security module 50 to create a file for sending. Security module 50 prepares a file (the specific content of which is determined by parameters in parameter storage and configuration module 52) and draws the necessary data from store 48. Security module 50 arranges the required data in the required format encrypts it and passes it to communications module 44. Communications module 44 initiates a suitable communication (e.g. SMS message) containing the encrypted report suitably addressed (e.g. pre-pended) with the address of the destination CIS (pre-stored in module 44 or stored in a reconfigurable manner in parameter storage & configuration module 52) and sends this communication through the communication layer 40 to the CIS. Once the security module 50 receives confirmation of receipt, it marks the information for removal in the collected information store 48, and it is then deleted in the information store as selected by the parameters set.

The TIC is integrated with or communicates with the normal control applications of the vendor's products. This is either by being part of the terminal application 42 or as a result of being downloaded and, once installed, using standard interfaces for the collection of information. The application collects and passes the desired information from the product to the TIC.

The TIC carries out one or more of a number of activities in accordance with the configuration it is given.

At the most basic level, as described above, the TIC can simply pass information to the CIS. In theory, there is no limit to what can be passed back to the CIS. An entire voice conversation could be passed back given the data channel capacity. For example, local legal interception laws might support selected eavesdropping on voice conversations, in which case capture of voice (digitised, either encrypted, such as in P2P, or unencrypted, as in normal communications) could be initiated based on some controlling command or event (e.g. based on origination identity, such as telephone number, IP address or other identity used in the P2P communication or destination identity number that is under police surveillance). The information is preferably newly encrypted using an encryption key or key pair adopted between the TIC and the CIS. As another example, complete call records can be passed to the CIS. Most or all of this information is, of course, currently available to the network operator (with the exception of encrypted call content), but the provision of the TIC and the CIS enable an alternative route for collecting such information, as well as only selective required data .

The TIC can filter the information collected and allow selective sampling and storing of the information to be collected, until a configurable threshold of data has been passed, at which point this information is sent to the CIS and the data held on the terminal is removed.

The TIC can alternatively report back on only selected data from the information passed to the application, or can collate the information in counters in the application, such as call counters, data counters and common dialled numbers.

The information is collated by the TIC application and, as configured by the parameters it has received, it is encapsulated in a message, file, packet stream or the like, with the address of the CIS appended thereto and is sent via the chosen bearer path to the CIS. As an example, it is encapsulated in an electronic mail message addressed to an IP address identifying the CIS.

The TIC application provides: collation of the processed data information; addition of a sequence number to prevent replay; addition of authentication information; addition of integrity information such as internal counters - comparisons to which might be used to indicate if data if missing; and encryption of the data payload.

The CIS 18 acknowledges receipt of the information if received, and notifies the TIC 16. If the TIC 16 does not receive an acknowledgement (within a specified time) it will retry by sending either on the specified bearer path or an alternative bearer path, as set by parameters received by the TIC application.

The alternative path may also have an alternative CIS address allocated for business continuity or capacity reasons.

Many modem terminal systems such as PCs and mobile or IP phones have the ability to receive programs that can be automatically loaded into the terminal and used by that terminal for the specific application. The most common types prevalent today include: SIM tool Kit 3GPP specification 03.28; Symbian operating system used by Nokia™ for mobile phones and PDAs; and Java™ used by SUN for both mobile phone terminals and PCs used with Java Virtual machines™. Application specific control programs could also be considered and used as part of the integration of applications.

The configuration parameters to be received by the TIC are encrypted and contain information to enable the TIC to be configured. The configuration information includes: CIS address(es) - optional secondary addresses; data transportation path(s) - optional secondary paths; encryption type and standard used encryption key; authentication key; data to be sampled; filtering and reporting rules for data (e.g. pass data after n calls, after n minutes of calls, or after n Mbit data transfer); aggregating of counters of use and the thresholds; legal interception interface and configuration module; and module configuration information.

Once the CIS 18 has collected the data it can be used for several different customer monitoring and control activities, including fraud management, revenue assurance, security protection, content control and legal interception. For example, in the case of fraud detection, the process that runs on the CIS is based on known or novel detection algorithms, including unusual calling pattern algorithms and immediate risk information. Examples of unusual calling pattern algorithms include algorithms that determine whether a selected information item has exceeded a threshold value for a certain period (e.g. an hour, a day or a week). Examples of such information, in generic categories, are as follows:
- information based on an origination identity e.g. origination terminal identity telephone number, MSISDN, IMSI, IMEI, IP address, P2P encrypted key etc;
- information based on a destination identity, telephone number, MSISDN, IMSI, IMEI, IP address, P2P encrypted key etc;
- the type of the destination address, free calls, premium rated specific content, such as address considered as unacceptable (child pornography sites based on an address list.
- the use events e.g. number of free phone calls/period/on a per customer basis (e.g. 5), or number of PRS calls/period/on a per customer basis (e.g. 3) or number of international calls/per period/on a per customer basis (e.g. 5);
- mid-session events, e.g. number of call forwards, or packet redirects per customer (e.g. 5);
- information on activity carried out by the terminal device outside of its own home operator environment, e.g. number of roaming calls/period /on a per customer basis (e.g. 10);
- the transmission of information messages that exceed a predefined level e.g. SMS, MMS, GPRS data volumes or IP packet data e.g. number of **MO SMS** or **MT SMS** messages sent per period /on a per customer basis.

In the case of revenue assurance, the detection process that runs on the CIS may be based on known or novel detection algorithms in conjunction with information held in the network, looking for unusual levels of leakage. Examples of such leakage detection are:
- The number of all calls to a particular number destination from all the terminal devices, compared to network held information;
- The duration of a call made by the terminal device compared to the information held in the network;
- Terminal devices that claim to be connected to the network but are not seen in the network databases or not generating activity
- Use of the network by P2P services that are not recorded in the central network systems
- Other algorithms used by commercial revenue assurance platforms

In each case the CIS can produce an event alarm for each type of detected item either on its occurrence or if the threshold value has been exceeded for the defined period. The alarm can be displayed in the CIS system and/or can be sent to other existing commercial systems for risk management or fraud or revenue assurance, and in some cases to normal business communication systems such as email or SMS.

Immediate risk information reporting by the use of comparing the information sent from the terminal to the CIS 18 can make use of database comparison to fixed tables in the database 51, or can make use of "hot lists" of information in the CIS, listing events which are to trigger an immediate report if they occur. Examples include:
- PRS call matching "X" number;
- Terminal identify number (telephone number, MSISDN, IMSI, IMEI, IP address, P2P encrypted key etc.) that is on a "blacklist" of numbers in the system;
- Long event alarm, based on a comparison to generic values held for types of call, e.g. international call prefixed with "0031" or premium numbers prefixed with "0911" held in the database 51.

The process of providing revenue assurance of a service offered, either as content based or consumption based, can be conducted by the terminal device as a separate information collector. Information can be consumption recorded in the network either on a customer-by-customer basis or summated at a service level and then compared to the information sent from the TIC to the CIS. This can be used to validate for example micro-payments where the information may not be collected in a central system.

The use of micro-payment may be based on the use of a terminal-based consumption record such as is described in US Patent No 6625439, or other systems that have an initial value stored on the terminal that is decremented in small amounts for use in accessing systems (such as car parks), sending messages, or buying content (such as a drink can). Alternative schemes that allow for the transfer of financial value from one terminal device to another terminal device on a P2P basis also exist. Due to their low value, these micro-payments are decremented or transferred from an electronic purse held in the terminal device. The information on the transaction can be sent to the CIS, counted and used for risk assessment in a manner similar to that described above for communications sessions.

The summation of the use would match event records (EDRs) from content platforms and an operator's traditional mediation and billing system 29 with that from the TIC and with the information from the terminal, producing an event alarm if there are differences, and also producing a report on a daily basis for:
- Total number of customers affected;
- Records for each customer reviewed;
- Reports on the type of alarm raised and /or severity;
- Indication of any financial value in the CIS (if rating information process is included or sent to a revenue assurance or fraud platform which has a capability of rating suspected fraud or revenue loss events).
- Cumulative alarm management. (in fraud management systems, where there are a number of events that are correlated and summed in to a summation alarm, these are called a "case".) The summation alarm can use a number of activities, such as excessive international call, and/or long calls, which together indicate an elevated risk compared to the single risk identified.

If the data consumption recorded by the operator's network and the TIC is different by "x" amount (an operator-configured threshold), the CIS can raise an event alarm. The CIS can also send a report to relevant parties (either using the CIS 18 or external system such as fraud analyst) based on a set period, e.g. hourly, daily or weekly; for such items and produce a report on a daily basis of:
- The total number of customers affected by a particular issue;
- The record of the effect for each customer reviewed.

For both of the above cases the system will have the ability to mark records that do not match "as accepted as good" by the system based on conditions such as time differences, length of call, origination and destination number, type of content.

For the purposes of legal interception, it has been described that the TIC can be configured by the parameters from the CIS to monitor all activities of the terminal and to send the information to the CIS. In this case, the traffic packet data and associated information can be handled according to one of two methods.

The first alternative method provides monitoring carried out at the terminal. With this method, the CIS parameter calculation and configuration module 32 provides the configuration information to be sent to the TIC 16 to instruct it to send copies of the traffic and associated information to a dedicated terminal address, which acts as the Legal Interception Termination Point (LITP), which does not need to be the same location or system as the CIS.

The information obtained from either of the above options is transferred to the legal interception interface module for transportation of the information to the appropriate legal intercept authority. The information interface must meet ETSI and 3GPP Legal Intercept Centre (LIC) requirements.

The arrangements described can be used for purposes of micro-payments, e.g. for purposes of verification of P2P micro-payments, as the arrangements described can permit verification of EDRs/information on both terminals. This would enable normal customers to act as vendors for almost anything and would provide an innovative new value-added service. The concept of P2P selling would of course also provide an opportunity for fraudulent abuse, which would require monitoring by a terminal based information collector and risk management solution. Examples of this use include:
- paying for ring tones that friends have written
- paying for downloaded MP3s transferred P2P
- paying for access to value-added data services - streaming media/news/soaps
- validation of P2P payments e.g. a settlement of a debt between two customers.

With the lack of content control of information of all types worldwide, and with the lack of information source controls, there is a need to limit or report on and place controls on the content of information such as:
- Limiting material of a sexual material that is not acceptable to the age of the user of the terminal;
- Legality of content controls based on accepted behaviour such as religious or political controls (e.g. the use of key words that are seen as offensive in some countries such in Saudi Arabia);
- Controls on gaming/gambling as it could reveal the content and transactions in an unencrypted state;
- Control by the terminal owner's parents of a level set with the operator, where the owner is below legal age;
- Controls on filtering and misuse of MMS. These have been abused for distribution of child-porn (it might be possible using TIC information to provide information on website access or MMS sent for LIC).

The system cannot provide detailed processing of all transaction data, but it could be configured, subject to the vendor terminal application, to monitor for key words, age or transaction types or protocols for unacceptable content. The CIS could update the TIC on key information, such as age profile of content.

Information in the database needs to use reporting tools, such as Business Objects, Crystal Reports or a report writer, to enable data extraction against the set fraud and risk reports. These are separate to the fraud algorithms and are not part of the patent.

Other possible utilisations of the arrangements described would be anywhere where a distributed computing environment operates, which could result in a significant potential loss of revenue or data. Possible examples could include:
- a terminal that stores prepaid value for use in the provision of services such a terminal-based prepaid system using micro-payments or e-purses to control the potential revenue or fraud risks;
- e-book readers or the like, where there is controlled access to information, such as restricted access documents or address-books, where confidentiality is important, and where an audit record is maintained to monitor usage or flag potential abuse
- applications such as GPS that provide information such as terminal velocity or location information for LIC purposes, which are otherwise network & processing intensive applications.

Thus, a system of distributed risk management has been descried that is based on each terminal device under control having a risk module, including fraud, revenue assurance, security and legal interception capability, that will collect information from the terminal devices and transfer the essence of the information in a secure way to a central system for processing. The terminal requires a small software program that enables the collection of the information and the processing and communication over a chosen bearer path, such as SMS, GPRS or IP connection. It is expected that the communication path would be packet based.

The computer code is installed during the manufacturing process or can be remotely uploaded to the device over the communication path. While in use, the operator, service provider or other third parties could use the proposed system to provide notification of activities back to a central monitoring and control point, managed by either the operator or a third party risk management provider, which could include Praesidium Technologies Ltd. (PTL).

The centralised system then collects the information and enables the processing of the information using established fraud management, revenue assurance, security protection, content control and legal interception algorithms to determine which information gives rise to alerts. In addition, the central system can decide, based both upon the rating of risk and the severity that the terminal has been assigned, the degree to which the terminals' activity should be monitored. The decisions may be based upon learned heuristics relating to "normal" usage of the device.

The collection of information is preferably hidden from user activity and is secured to prevent tampering by the user to "turn off" the functionality. This is achieved by the use of encrypted communication between the TIC 16 and the terminal application, and by the lack of provision of customer controls from the application. The security of the communication can be based on the generic security feature of the application, such as in JAVA™.

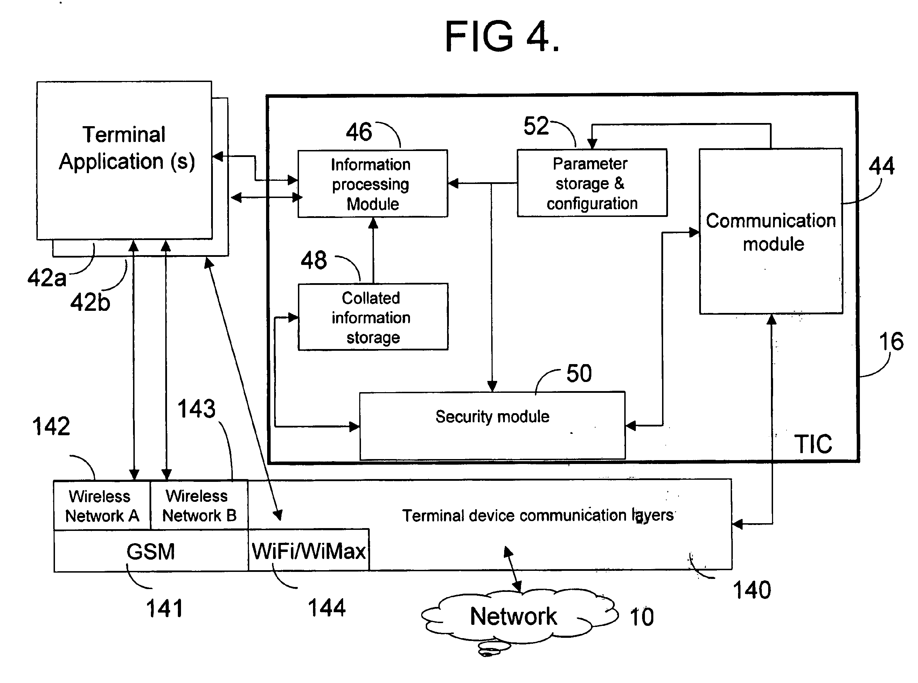

Referring now to Fig. 4, an alternative embodiment of the invention is illustrated. In this embodiment, the terminal device 11, 12 or 13, is shown as having more than one terminal application 42A and 42B and more than one physical communication layer within the terminal device communication layers 140. These physical communication layers include, by way of example, a GSM layer 141 and a WiFi/WiMax 144. The GSM layer 141 is also illustrated as having more than one selection for wireless network. For example, communication may take place through different operator networks 142 and 143. In the illustrated example, terminal application 42A (which may be a voice application or an SMS text messaging application) can selectively communicate through either one of wireless network A and wireless network B. Meanwhile, terminal application 42B (which may, for example, be an email application) can communicate through WiFi/WiMax layer 144. In this embodiment, information processing module 46 is able to monitor each of the terminal applications 42A and 42B. It is also able to monitor terminal application 42A regardless of the selection of wireless network.

In operation, any communication through terminal application 42A or 42B, whether it is through network A or network B and whether it is by GSM and WiFi/WiMax or other communications layer, is monitored by information processing module 46. In this manner, module 46 monitors all communications activity of the terminal device and not just communications through a particular network or a particular physical layer.

The embodiment of Fig. 4 is particularly useful for the purposes such as revenue assurance arbitrage. For example, if GSM network A offers a service such as a data service or a video service, but the user of the terminal finds, for any reason, that wireless network B or WiFi/WiMax network 144 is the user's preferred choice for that service, the information collected by store 48 and reported through communications module 44 to the CIS would indicate to the operator of wireless network A that the service, although available, is not being selected through that preferred and configured network connection. This may be because wireless network A's pricing is too high or for some other reason that forces the technical connection.

The CIS is able to identify that there is revenue leakage in one of two ways. Either the TIC reports to the CIS information indicating that the other network is selected and is being used by the user of the terminal, or the CIS is able to compare the information reported by the TIC with information received by the CIS through operator network interface 22 (see Fig. 2). By correlating the information received through the network interface 22 with the information received through the TIC, the CIS is able to identify that communications are taking place that are unknown to the operator of network A. This is indicative of revenue loss. In other words, communications are taking place from the terminal through the network by other communications layers and there is an opportunity for the operator of wireless network A to improve the share of those communications taking place through that operator's network.

In this manner, if it is noticed that the user is, for example, downloading television clips, but no charge is being charged on the user's bill (where the user is subscribing for data but not for television) this indicates a revenue assurance opportunity. Similarly, if the user is subscribing for one megabyte of data per month, but is receiving three times that amount, this is indicative of an opportunity to change that subscriber's subscription plan.

In accordance with a preferred feature, the risk manager application 28 of the CIS 18 automatically initiates an action in response to a revenue assurance event identified by the risk manager application. A communication module 21 (Fig. 2) is provided, coupled to the risk manager applications 28, to generate a message, for example an SMS message, to send to the user terminal via the network. An example of such a message is "Did you know that you have exceeded your pre-paid data usage and you could save money by switching to our premium plan?"

The terminal of Fig. 4 may be a dual-SIM terminal. In such an embodiment, there may be a TIC 16 for each of the two operators operating wireless network A and wireless network B. Each TIC may report to a separate CIS for each respective operator. In this manner, each operator can have visibility as to the traffic that the terminal is receiving or generating through the other network. This can enhance opportunities for competition between the two operator networks.

Without the TIC 16, an operator will have no way of knowing if the user is selecting a WiFi/WiMax network or some other means of communication.

It has been explained that the arrangements described can be used to enhance fraud management. For example, there may be communications taking place on the device that result in changes of which the user is unaware (such as cookies, Java applets etc).

Preferably the risk manager applications 28 in the CIS identifies patterns or telltales indicative of such risks. Patterns include fraudulent dialling patterns. An example of such a pattern is where a user is paying for his own bill, but his usage pattern does not match the pattern of someone paying for his own bill. The usage pattern may match the pattern of someone who is not paying. There may be two sources of fraud: (a) where the customer provided fraudulent information at the time they initially requested the service; and (b) where the SIM card is "cloned" and the serial number is copied so that someone else is using the services. The first type of fraud may be identified by matching or correlating to a fraudulent use pattern from the outset. In other words, from the outset the pattern of usage is the pattern of a fraudulent user rather than an honest user. The second type of fraud is identified at the CIS by recognising usage associated with that SIM through the operator network interface 22 that is not identified through the TIC. Where the TIC sees only part of the communications for that SIM, this is indicative of a cloned SIM. Similarly, where the usage identified by the TIC identifies a handset ID that is different from the usage identified through the operating network interface 22, the risk management applications 28 identify this discrepancy.

Where fraudulent use is identified, an action that may be automatically taken is the generation of an SMS message through the communications module 31 to 1 (or indeed both) of the identified SIMs. For example, a message to the SIM believed to be "true" may say "We suspect that your handset has been cloned, please dial our customer services". A message to the suspected cloned SIM may be "Your service is about to be suspended, please telephone customer services to continue service". At the same time, a message or event may be generated to the operator network interface 22 to suspend that service after a predetermined period of time, e.g. 24 hours.

It has been explained how the invention can be used for credit profiling/management. For example, when a customer wants to use a new service (e.g. to start receiving Internet based television IPTV) the operator may need to make an immediate decision as to whether this customer is creditworthy. The risk management applications 28 may identify this by examining the usage pattern. Where the usage pattern matches that of a creditworthy user, this generates a "creditworthy" indication. For example, where the TIC identifies that not only is this user using his or her monthly allocation of services through wireless network A, but indeed the user is consistently and regularly using a level of usage through another network(s) or through the WiFi/WiMax communication layer, this is indicative of a credit worthy user to whom network A may readily sell more services. A different usage pattern may be indicative or an extremely cautious user who cannot afford to exceed his or her present level of usage through wireless network A. Such a usage pattern may, for example, be one where communications slow down at the point where the user reaches his or her monthly allocation.

Another usage pattern might be one where the user is accessing certain websites. For example, excessive use of a gambling site may be indicative of a user who is not creditworthy. The information processing module 46 retrieves the URL's of the sites being visited (whether through the GSM network 141 or the WiFi/WiMax network 144) and passes this information to the CIS. The CIS compares the websites being visited with websites previously being identified as useful for measuring credit worthiness patterns and the risk manager applications 28 perform analysis of the usage pattern. Access to other sites may be indicative of a highly creditworthy user. As a result of the analysis, the risk manager 28 may generate a message through the communications module to the user such as "Congratulations, you are authorised to access the service you have requested" and/or, the risk manager applications 28 may generate a signal to the operator network interface 22 to cause the operator network to grant access to the service.

It has been explained how the invention may be used for content control. For example, if the user is seen to be accessing websites inappropriate given the profile of the registered user, the risk manager applications 28 may identify this usage and call the communications module 31 to send a message to the terminal. For example, the message might say "You are accessing an adult website and this will be identified on your bill". The risk manager applications 28 may identify that the website being accessed is in fact illegal and may cause a message to be sent to the operating network interface 22 to suspend the particular session or suspend communication to some level or for some pre-arranged time period etc.

The objective of revenue assurance, fraud management, credit control and security are generically referred to in the industry as "enterprise risk management".

Another application of the invention is for marketing test purposes. For example, the communications module 31 may generate a message to the user to inform the user that the user is to benefit from a promotional period in which the user tariff is reduced. The risk manager applications 28 may then monitor the change of usage and determine whether the user response to the commercial message has been positive. Similarly, communications module 31 may generate test advertisements and the risk manager applications 28 may monitor the response to those test versions.

Other uses of the invention may be readily apparent to one of ordinary skill in the art.

## Claims

1. A communications system comprising a subscriber terminal (11, 12, 13, 14 or 15) for communication through a distributed communications network (10) and a central information server (18), wherein the subscriber terminal comprises;
means (42 ,40, 140) for establishing a communications through the communications network,
a terminal information collection module (16) for collecting information relating to communications established through the communications network;
means for receiving at least one configuration parameter indicative of a Level of monitoring;
server reporting means (44, 48, 50) for reporting to the central information server information collected by the terminal information collection module in accordance with the level of monitoring;
means for adjusting, in response thereto, an information collection and/or a reporting period in dependence upon the received at least one configuration parameter;
wherein the central information server comprises a risk analysis module (28, 30) for risk analysis of the information collected.

2. The system in accordance with claim 1, further comprising a communication module (31) associated with the central information server arranged to take an action upon identification by the risk analysis module of a predetermined enterprise risk management event.

3. The system in accordance with claim 2, wherein the action includes sending a message to the terminal.

4. The system in accordance with claim 2 wherein the action includes granting access in the network to additional communications services.

5. The system in accordance with claim 2 wherein the action includes suspending access in the network to existing communications services

6. The system in accordance with claim 1, wherein the terminal comprises means for adjusting a reporting period dependent on the configuration parameter.

7. The system in accordance with claim 1, wherein the risk analysis module is adapted to: assess the need for selective monitoring, determine a level of monitoring to be conducted at the terminal, and cause a suitable configuration parameter to be sent to the terminal.

8. The system in accordance with claim 1, further comprising means for presenting in graphical form a representation of customer risk parameters tracked over time.

9. The system in accordance with any one of the preceding claims, wherein the information collected and reported is risk-related event information relating to communications events of the terminal device.

10. The system in accordance with claim 1, wherein the information collected and reported includes routing information for a communications event.

11. The system in accordance with any one of the preceding claims wherein the terminal information collection module and the server reporting means are arranged to report and/or control micro-payment transactions made in the terminal or information sent in peer-to-peer connections.

12. The system in accordance with any one of the preceding claims, wherein the central information server comprises an analysis module for analysing the information collected for at least one of:
information based on one or several terminal applications
information based on origination identity;
information based on the destination identity;
number of call forwards or packet redirects per customer;
information on activity carried out by the terminal device outside of a home operator environment; and
transmission of information messages that exceed a predefined level.

13. The system in accordance with claim 1, wherein the information collected and reported is risk-related event information relating to communications events of the terminal device including events of an allowed event type and events of a disallowed event type, wherein the central information server comprises the risk analysis module for analysing the information collected for events that are of a disallowed event type.

14. The system in accordance with any one of the preceding claims, wherein the central information server comprises the risk analysis module for analysing the information collected for terminal identity mismatch.

15. The system in accordance with any one of claims 1 to 13, wherein the central information server comprises the risk analysis module for analysing the information collected for at least one of:
number of events to a particular destination from all the terminal devices, compared to network held information;
type of event; and
subscriber terminals that claim to be connected to the network but are not identifiable in network databases.

16. A subscriber terminal (11, 12, 13, 14 or 15) adapted for communication through a distributed communications network and adapted for communication with a central information server, the terminal comprising:
means (42, 40, 140) for establishing a communications through the communications network;
a terminal information collection module (16) for collecting information relating to communications established through the communications network;
server reporting means (44, 48, 50) for reporting to the central information server information collected by the terminal information collection module;
means for receiving at least one configuration parameter indicative of a level of monitoring: and
means for adjusting, in response thereto, information collection and/or a reporting period in dependence upon the received at least one configuration parameter.

17. A central information server (18) for a communications system having a subscriber terminal for communication through a distributed communications network, the server comprising:
means for causing at least one configuration parameter indicative of a level of monitoring to be sent to the subscriber terminal:
means (20, 24, 25) for receiving from the subscriber terminal information relating to communications with the subscriber terminal collected in accordance with the level of monitoring; and
a risk analysis module (28, 30) for risk analysis of information relating to communications with the subscriber terminal.

18. The server according to claim 17, further comprising a communication module (31) arranged to take an action upon identification by the risk analysis module of a predetermined enterprise risk management events.

19. The server according to claim 18, wherein the action includes sending a message to the terminal.

20. The server according to claim 19, wherein the action includes granting access in the network to additional communications services.

21. The server according to claim 18, wherein the action includes suspending access in the network to existing communications services.

22. The server according to claim 18, for collecting and analysing information relating to communications established through the communications network, **characterized by** means adapted to receive the information from a terminal information collection module of a subscriber terminal establishing such communications.

23. The server according to claim 18, wherein the information collected comprises at least one of:
information based on origination identity;
information based on the destination identity;
number of call forwards or packet redirects per customer;
information on activity carried out by the terminal device outside of a home operator environment; and
transmission of information messages that exceed a predefined level.

24. The server according to any one of claims 18 to 23, coupled to a network having event types including allowed event types and disallowed event types, the information server comprises an analysis module for analysing the information collected for events that are of an disallowed event type.

25. The server according to any one of claims 18 to 24, further comprising the risk analysis module for analysing the information collected from the subscriber terminal for IMEI and/or IMSI mismatches.

26. The server according to any one of claims 18 to 25, further comprising an analysis module for analysing the information collected for at least one of:
number of events related to activity in information transfer to a particular destination from all terminal devices, compared to network held information;
number of events related to activity in information transfer to a particular destination from a set of terminal devices, compared to network held information;
events made by the terminal device compared to network held information; and
subscriber terminals that claim to be connected to the network but are not identifiable in network databases.

## Patentansprüche

1. Kommunikationssystem, das ein Teilnehmer-Endgerät (11, 12, 13, 14 oder 15) zur Kommunikation über ein verteiltes Kommunikationsnetz (10) und einen zentralen Informationsserver (18) umfasst, wobei das Teilnehmer-Endgerät Folgendes umfasst:
Mittel (42, 40, 140) zum Aufbauen einer Kommunikation über das Kommunikationsnetz;
ein Endgerät informations-Erfassungsmodul (16) zum Erfassen von Informationen, die über das Kommunikationsnetz aufgebaute Kommunikationen betreffen;
Mittel zum Empfangen mindestens eines Konfigurationsparameters, der eine Überwachungsstufe anzeigt;
Server-Berichtsmittel (44, 48, 50) zum Berichten der durch das Endgerätinformations-Erfassungsmodul erfassten Informationen an den zentralen Informationsserver gemäß der Überwachungsstufe;
Mittel zum Einstellen einer Informationserfassung und/oder eines Meldezeitraums als Reaktion darauf abhängig von dem mindestens einen empfangenen Konfigurationsparameter;
wobei der zentrale Informationsserver ein Risikoanalysemodul (28, 30) zur Risikoanalyse der erfassten Informationen umfasst.

2. System nach Anspruch 1, das ferner ein dem zentralen Informationsserver zugehöriges Kommunikationsmodul (31) umfasst, das eingerichtet ist, um bei der Identifikation eines vorbestimmten Unternehmensrisikomanagement-Ereignisses eine Maßnahme zu ergreifen.

3. System nach Anspruch 2, wobei die Maßnahme das Senden einer Meldung an das Endgerät umfasst.

4. System nach Anspruch 2, wobei die Maßnahme das Gewähren von Zugriff im Netzwerk auf zusätzliche Kommunikationsdienste umfasst.

5. System nach Anspruch 2, wobei die Maßnahme das Aufheben des Zugriffs im Netzwerk auf bestehende Kommunikationsdienste umfasst.

6. System nach Anspruch 1, wobei das Endgerät Mittel zum Einstellen eines Berichtszeitraums in Abhängigkeit vom Konfigurationsparameter umfasst.

7. System nach Anspruch 1, wobei das Risikoanalysemodul eingerichtet ist, um die Notwendigkeit selektiver Überwachung zu beurteilen, eine am Endgerät durchzuführende Überwachungsstufe zu bestimmen und das Senden eines zweckmäßigen Konfigurationsparameters an das Endgerät zu bewirken.

8. System nach Anspruch 1, das ferner Mittel zum Darstellen einer Darstellung von über die Zeit verfolgten Kundenrisikoparametern in grafischer Form umfasst.

9. System nach einem der vorhergehenden Ansprüche, wobei die erfassten und berichteten Informationen risikoverbundene Ereignisinformationen sind, die Kommunikationsereignisse der Endgerätvorrichtung betreffen.

10. System nach Anspruch 1, wobei die erfassten und berichteten Informationen Routing-Informationen für ein Kommunikationsereignis umfassen.

11. System nach einem der vorhergehenden Ansprüche, wobei das Terminalinformations-Erfassungsmodul und die Server-Berichtsmittel zum Berichten und/oder Kontrollieren von im Endgerät vorgenommenen Mikrozahlungstransaktionen oder in Peer-to-Peer-Verbindungen gesendeten Informationen eingerichtet sind.

12. System nach einem der vorhergehenden Ansprüche, wobei der zentrale Informationsserver ein Analysemodul zum Analysieren der für mindestens eines von Folgendem erfassten Informationen umfasst:
Informationen auf der Grundlage einer oder mehrerer Endgerätanwendungen;
Informationen auf der Grundlage der Ursprungsidentität;
Informationen auf der Grundlage der Zielidentität;
Anzahl von Rufumleitungen oder Paketumlenkungen pro Kunde;
Informationen über die durch die Endgerätvorrichtung außerhalb einer Umgebung des vertraglichen Netzbetreibers durchgeführte Tätigkeit; und
Sendung von Informationsnachrichten, die eine vorbestimmte Stufe überschreiten.

13. System nach Anspruch 1, wobei die erfassten und berichteten Informationen risikoverbundene Ereignisinformationen sind, die Kommunikationsereignisse der Endgerätvorrichtung betreffen, die Ereignisse einer erlaubten Ereignisart und Ereignisse einer nicht erlaubten Ereignisart umfassen, wobei der zentrale Informationsserver das Risikoanalysemodul zum Analysieren der für Ereignisse von einer nicht erlaubten Ereignisart erfassten Informationen umfasst.

14. System nach einem der vorhergehenden Ansprüche, wobei der zentrale Informationsserver das Risikoanalysemodul zum Analysieren der für die Nichtübereinstimmung der Endgerätidentität erfassten Informationen umfasst.

15. System nach einem der Ansprüche 1 bis 13, wobei der zentrale Informationsserver das Risikoanalysemodul zum Analysieren der für mindestens eines von Folgendem erfassten Informationen umfasst:
Anzahl der Ereignisse zu einem bestimmten Ziel von allen Endgerätvorrichtungen, verglichen mit dem durch das Netz gehaltenen Informationen;
Art des Ereignisses; und
Teilnehmer-Endgeräte, die behaupten, mit dem Netz verbunden zu sein, aber nicht in den Netzdatenbanken identifizierbar sind.

16. Teilnehmer-Endgerät (11, 12, 13, 14 oder 15), das zur Kommunikation über ein verteiltes Kommunikationsnetz eingerichtet ist und zur Kommunikation mit einem zentralen Informationsserver eingerichtet ist, wobei das Endgerät Folgendes umfasst:
Mittel (42, 40, 140) zum Aufbauen einer Kommunikation über das Kommunikationsnetz;
ein Endgerätinformations-Erfassungsmodul (16) zum Erfassen von Informationen, die über das Kommunikationsnetz aufgebaute Kommunikationen betreffen;
Sever-Berichtsmittel (44, 48, 50) zum Berichten von durch das Endgerätinformation-Erfassungsmodul erfassten Informationen an den zentralen Informationsserver;
Mittel zum Empfangen mindestens eines Konfigurationparameters, der eine Überwachungsstufe anzeigt; und
Mittel zum Einstellen einer Informationsertassung und/oder eines Meldezeitraums als Reaktion darauf abhängig von dem mindestens einen empfangenen Konfigurationsparameter;

17. Zentraler Informationsserver (18) für ein Kommunikationssystem, das ein Teilnehmer-Endgerät zur Kommunikation über ein verteiltes Kommunikationsnetz umfasst, wobei der Server Folgendes umfasst:
Mittel zum Bewirken des Sendens mindestens eines Konfigurationsparameters, der eine Überwachungsstufe anzeigt, an das Teilnehmer-Endgerät;
Mittel (20, 24, 25) zum Empfangen von gemäß der Überwachungsstufe erfassten Informationen, die Kommunikationen mit dem Teilnehmer-Endgerät betreffen, vom Teilnehmer-Endgerät; und
ein Risikoanalysemodul (28, 30) zur Risikoanalyse von Informationen, die Kommunikationen mit dem Teilnehmer-Endgerät betreffen.

18. Server nach Anspruch 17, der ferner ein Kommunikationsmodul (31) umfasst, das eingerichtet ist, um bei der Identifikation eines vorbestimmten Unternehmensrisikomanagement-Ereignisses durch das Risikoanalysemodul eine Maßnahme zu ergreifen.

19. Server nach Anspruch 18, wobei die Maßnahme das Senden einer Nachricht an das Endgerät umfasst.

20. Server nach Anspruch 19, wobei die Maßnahme das Gewähren von Zugriff im Netzwerk auf zusätzliche Kommunikationsdienste umfasst.

21. Server nach Anspruch 18, wobei die Maßnahme das Aufheben des Zugriffs im Netzwerk auf bestehende Kommunikationsdienste umfasst.

22. Server nach Anspruch 18 zum Erfassen und Analysieren von Informationen, die durch das Kommunikationsnetz aufgebaute Kommunikationen betreffen, **gekennzeichnet durch** Mittel, die eingerichtet sind, um die Informationen von einem Endgerätinformations-Erfassungsmodul eines Teilnehmer-Endgeräts zu empfangen, das solche Kommunikationen aufbaut.

23. Server nach Anspruch 18, wobei die erfassten Informationen mindestens eines von Folgendem umfassen:
Informationen auf der Grundlage der Ursprungsidentität;
Informationen auf der Grundlage der Zielidentität;
Anzahl von Rufumleitungen oder Paketumlenkungen pro Kunde;
Informationen über die durch die Endgerätvorrichtung außerhalb der Umgebung eines vertraglichen Netzbetreibers durchgeführte Tätigkeit; und
Sendung von Informationsnachrichten, die eine vorbestimmte Stufe überschreiten.

24. Server nach einem der Ansprüche 18 bis 23, der an ein Netzwerk gekoppelt ist, das Ereignisarten aufweist, die erlaubte Ereignisarten und nicht erlaubte Ereignisarten umfassen, wobei der Informationsserver ein Analysemodul zum Analysieren der für Ereignisse einer nicht erlaubten Ereignisart gesammelten Informationen umfasst.

25. Server nach einem der Ansprüche 18 bis 24, der ferner das Risikoanalysemodul zum Analysieren der vom Steilnehmer-Endgerät erfassten Informationen für IMEI- und/oder IMSI-Nichtübereinstimmungen umfasst.

26. Server nach einem der Ansprüche 18 bis 25, der ferner ein Analysemodul zum Analysieren der für mindestens eines von Folgendem erfassten Informationen umfasst:
Anzahl der Ereignisse, die die Tätigkeit in der Informationsübertragung zu einem bestimmten Ziel von allen Endgerätvorrichtungen, verglichen mit durch das Netz gehaltenen Informationen, betreffen;
Anzahl der Ereignisse, die die Tätigkeit in der Informationsübertragung an ein bestimmtes Ziel von einer Menge von Endgerätvorrichtungen, verglichen mit durch das Netz gehaltenen Informationen, betreffen;
durch die Endgerätvorrichtung durchgeführte Ereignisse, verglichen mit durch das Netz gehaltenen Informationen; und
Teilnehmer-Endgeräte, die behaupten, mit dem Netz verbunden zu sein, aber nicht in der Netzdatenbank identifizierbar sind.

## Revendications

1. Système de communication comportant un terminal d'abonné (11, 12, 13, 14 ou 15) permettant une communication à travers un réseau de communications distribué (10) et un serveur central d'information (18), dans lequel le terminal d'abonné comprend :
des moyens (42, 40, 140) pour établir une communication à travers le réseau de communications ;
un module terminal de collecte d'information (16) pour collecter une information se rapportant à des communications établies par l'intermédiaire du réseau de communications ; et
des moyens pour recevoir au moins un paramètre de configuration indicateur d'un niveau de surveillance ;
des moyens de générateur de rapport vers le serveur (44, 48, 50) permettant de transmettre un rapport au serveur d'information central une information collectée par le module terminal de collecte d'information selon le niveau de surveillance ;
des moyens pour régler, en réponse à cela, une collecte d'information et/ou une période de rapport dépendant d'au moins un paramètre de configuration reçu ; dans lequel le serveur central d'information comporte un module d'analyse de risque (28, 30) destiné à une analyse de risque de l'information collectée.

2. Système selon la revendication 1 comprenant, de plus, un module de communication (31) associé au serveur d'information central agencé en vue de conduire vers une action lors de l'identification par le module d'analyse de risque d'un événement prédéterminé de gestion des risques d'entreprise.

3. Système selon la revendication 2, dans lequel l'action comprend l'émission d'un message vers le terminal.

4. Système selon la revendication 2, dans lequel l'action comporte le fait d'autoriser l'accès au réseau à des services de communication supplémentaires.

5. Système selon la revendication 2 dans lequel l'action comporte le fait de suspendre l'accès au réseau à des services de communication existants.

6. Système selon la revendication 1, dans lequel le terminal comporte des moyens permettant de régler une période de rapport dépendant du paramètre de configuration.

7. Système selon la revendication 1, dans lequel le module d'analyse de risque est adapté pour : évaluer le besoin pour une surveillance sélective, déterminer un niveau de surveillance à réaliser au niveau du terminal, et entraîner un paramètre de configuration approprié à être transmis au terminal.

8. Système selon la revendication 1 comprenant, de plus, des moyens pour présenter sous une forme graphique une représentation de paramètres de risque des usagers, suivis dans le temps.

9. Système selon l'une quelconque des revendications précédentes, dans lequel l'information collectée et rapportée est une information sur les événements relatifs au risque concernant des événements de communication du dispositif terminal.

10. Système selon la revendication 1, dans lequel l'information collectée et rapportée comporte une information de routage concernant un événement de communication.

11. Système selon l'une quelconque des revendications précédentes dans lequel le module terminal de collecte d'information et les moyens pour transmettre un rapport au serveur sont agencés afin de rapporter et/ou de contrôler des transactions de micro-paiement réalisées dans le terminal ou l'information transmise dans des connexions de systèmes peer-to-peer.

12. Système selon l'une quelconque des revendications précédentes, dans lequel le serveur central d'information comporte un module d'analyse permettant d'analyser l'information collectée correspondant à au moins l'une :
d'une information sur la base d'une ou plusieurs application(s) de terminal ;
d'une information sur la base d'une identité de provenance ;
d'une information sur la base d'une identité de destination ;
du nombre de renvois d'appel ou de réacheminement de paquets par l'usager ;
d'une information sur une activité réalisée par le dispositif de terminal à l'extérieur d'un environnement rattaché à un opérateur ; et
de la transmission de messages d'information qui dépassent un niveau prédéterminé.

13. Système selon la revendication 1, dans lequel l'information collectée et rapportée est une information d'événement concernant le risque se rapportant à des événements de communication du dispositif terminal incluant des événements d'un type d'événement autorisé et des événements d'un type d'événement non autorisé, dans lequel le serveur central d'information comprend le module d'analyse de risque permettant d'analyser l'information collectée correspondant à des événements qui sont d'un type d'événement non autorisé.

14. Système selon l'une quelconque des revendications précédentes, dans lequel le serveur d'information central comporte le module d'analyse de risque pour analyser l'information collectée concernant une discordance d'identité du terminal.

15. Système selon l'une quelconque des revendications 1 à 13, dans lequel le serveur central d'information comprend le module d'analyse de risque pour analyser l'information collectée concernant au moins l'un de :
un certain nombre d'événements pour une destination particulière à partir de l'ensemble des dispositifs terminaux, en comparaison avec une information contenue dans le réseau ;
un type d'événement ; et
des terminaux d'abonnés qui revendiquent d'être connectés au réseau mais qui ne sont pas indentifiables dans les bases de données du réseau.

16. Terminal d'abonné (11, 12, 13, 14 ou 15) adapté pour une communication à travers un réseau de communications distribué et adapté pour une communication avec un serveur central d'information, le terminal comprenant :
des moyens (42, 40, 140) pour établir une communication par l'intermédiaire du réseau de communications;
un module terminal de collecte d'information (16) permettant de collecter une information se rapportant à des communications établies par l'intermédiaire du réseau de communications ;
des moyens de générateur de rapport vers le serveur (44, 48, 50) pour transmettre un rapport au serveur central d'information une information collectée par le module terminal de collecte d'information ;
des moyens pour recevoir au moins un paramètre de configuration indicateur d'un niveau de surveillance ; et
des moyens pour régler, en réponse à cela, une collecte d'information et/ou une période de rapport dépendant d'au moins d'un des paramètres de configuration reçus.

17. Serveur central d'information (18) destiné à un système de communications comportant un terminal d'abonné pour une communication par l'intermédiaire d'un réseau de communications distribué, le serveur comportant :
des moyens pour entraîner au moins un paramètre de configuration indicateur d'un niveau de surveillance à être transmis au terminal d'abonné ;
des moyens (20, 24, 25) pour recevoir à partir du terminal d'abonné une information relative aux communications avec le terminal d'abonné collectée selon le niveau de surveillance, et
un module d'analyse de risque (28, 30) destiné à une analyse de risque d'une information se rapportant à des communications avec le terminal d'abonné.

18. Serveur selon la revendication 17, comportant, de plus, un module de communication (31) agencé pour conduire une action lors d'une identification par le module d'analyse de risque d'événements prédéterminés de gestion des risques d'entreprise.

19. Serveur selon la revendication 18, dans lequel l'action comporte le fait de transmettre un message au terminal.

20. Serveur selon la revendication 19, dans lequel l'action comprend le fait d'autoriser un accès au réseau pour des services de communication supplémentaires.

21. Serveur selon la revendication 18, dans lequel l'action comprend le fait de suspendre l'accès au réseau pour des services de communication existants.

22. Serveur selon la revendication 18, permettant de collecter et d'analyser une information concernant des communications établies à travers le réseau de communications, **caractérisé par** des moyens adaptés pour recevoir l'information à partir d'un module terminal de collecte d'information d'un terminal d'abonné établissant ces communications.

23. Serveur selon la revendication 18, dans lequel l'information collectée comprend au moins l'une :
d'une information sur la base d'une identité de provenance ;
d'une information sur la base de l'identité de destination ;
d'un certain nombre de renvois d'appel ou de réacheminements de paquets par l'usager ;
d'une information sur une activité exécutée par le dispositif terminal à l'extérieur d'un environnement rattaché à un opérateur ; et
d'une transmission de messages d'information qui dépassent un niveau prédéfini.

24. Serveur selon l'une quelconque des revendications 18 à 23, couplé à un réseau présentant des types d'événements incluant des types d'événements autorisés et des types d'événements non autorisés, le serveur d'information comporte un module d'analyse pour analyser l'information collectée concernant des événements qui sont d'un type d'événement non autorisé.

25. Serveur selon l'une quelconque des revendications 18 à 24, comprenant, de plus, le module d'analyse de risque pour analyser l'information collectée à partir du terminal d'abonné pour des discordances IIEM (Identité Internationale d'Equipment de Station Mobile) et /ou IIAM (Identité Internationale d'Abonné Mobile).

26. Serveur selon l'une quelconque des revendications 18 à 25 comportant, de plus, un module d'analyse pour analyser l'information collectée concernant au moins l'un:
d'un certain nombre d'événements se rapportant à une activité dans le transfert de l'information vers une destination particulière à partir de tous les dispositifs terminaux, en comparaison avec une information contenue dans le réseau ;
d'un certain nombre d'événements se rapportant à une activité dans le transfert de l'information vers une destination particulière à partir d'un ensemble de dispositifs terminaux, en comparaison avec une information contenue dans le réseau ;
des événements réalisés par le dispositif terminaux, en comparaison avec une information contenue dans le réseau ; et
des terminaux d'abonné qui revendiquent d'être connectés au réseau mais qui ne sont pas identifiables dans les bases de données du réseau.
